# EUROPÄISCHE PATENTSCHRIFT

(11) **EP 0 397 921 B1**
(45) Veröffentlichungstag und Bekanntmachung des Hinweises auf die Patenterteilung: **22.09.1993**
(21) Anmeldenummer: 89123241.5
(22) Anmeldetag: 15.12.1989
(51) Int. Cl.: F16H 57/02

(54) **Verfahren zum Feststellen der erforderlichen Anstellung von Wälzlagern in Getrieben**
Method for positioning the bearings of a gearbox
Procédé de positionnement des bagues de roulement d'une boîte de vitesses

(30) Priorität: 19.05.1989 DE 3916314
(43) Veröffentlichungstag der Anmeldung: 22.11.1990
(73) Patentinhaber: FORD-WERKE AKTIENGESELLSCHAFT, 50725 Köln (DE); FORD FRANCE S. A., 92506 Rueil-Malmaison (FR); FORD MOTOR COMPANY LIMITED, Brentwood, Essex CM13 3BW (GB); Ford Motor Company, Dearborn Michigan 48126 (US)
(72) Erfinder: Bernhardt, Bodo, D-5024 Pulheim (DE); Mölders, Theo, D-4047 Dormagen (DE); Dijkhuis, Jan, D-5024 Pulheim (DE)
(74) Vertreter: Messulam, Alec Moses

(56) Entgegenhaltungen:
- DE-A- 2 551 934
- DE-A- 3 304 358
- DE-A- 3 408 310
- DE-A- 3 810 448
- DE-C- 1 902 254
- DE-C- 2 648 192
- US-A- 3 715 909
- US-A- 3 822 081
- INGENIEURS DE L'AUTOMOBILE. no. 4, 01 April 1977, BOULOGNE FR Seiten 235 - 242; M.VALENTIN: "OPTIMALISER LA SELECTION ET LE MONTAGE DES ROULEMENTS DE BOITES DE VITESSES"

## Beschreibung

Die Erfindung bezieht sich auf ein Verfahren zum Feststellen der erforderlichen Anstellung der Wälzlager von Wellenlagerungen in Gehäusen der im Oberbegriff des Patentanspruches 1 erläuterten Art.

In der DE-C-19 02 254 wird auf Seite 2 Absatz 2 eine dem Fachmann geläufige Verfahrensweise zum Feststellen der erforderlichen Anstellung der Wälzlager von Wellenlagerungen in Gehäusen beschrieben.

Das hierbei angewandte Messen von Parametern an den Lagern, wie der Lagerverformung oder des Reibmomentes eines Lagers zur Ableitung der Vorspannkraft, führt hierbei zu Abweichungen, mit deren Einengung sich diese Patentschrift befaßt.

Aus der DE-C-26 48 192 ist eine Vorrichtung zum Messen und/oder Überwachen der Axialkraft an einer Werkzeugspindel-Lagerung bekannt, bei der die Wälzlager der Werkzeugspindel in einer Meßbüchse aufgenommen werden, die wieder im Gehäuse aufgenommen wird.

Die Anordnung einer Meßbüchse, die ständig im Getriebegehäuse verbleibt, mag für eine Werkzeugmaschine zweckmäßig sein, zum Feststellen der erforderlichen Anstellung von Wälzlager von Wellenlagerungen in Gehäusen an in Großserie montierten Getrieben, Motoren oder dergleichen, wäre dies unwirtschaftlich.

Die Aufgabe der Erfindung ist es, ein Verfahren zum Feststellen der erforderlichen Anstellung der Wälzlager von Wellenlagerungen in Gehäusen der im Oberbegriff des Patentanspruches 1 erläuterten Art derart zu verbessern, daß durch Anwenden einer einfachen Vorrichtung entweder unmittelbar die auftretende Axialkraft oder der bei einer vorgegebenen erwünschten Axialkraft sich während eines Getriebelaufes einstellende Axialweg gemessen werden kann und damit eine sichere Grundlage für die zweckmäßige Auswahl von Ausgleichsscheiben bereitgestellt werden kann.

Gemäß der Erfindung wird diese Aufgabe gelöst, indem bei einem Verfahren gemäß dem Oberbegriff der Patentansprüche 1, 3 und 4 die jeweils im Kennzeichenteil der Patentansprüche 1, 3 und 4 aufgezeigten Verfahrensschritte ausgeführt werden.

Im Anspruch 2 ist eine zweckentsprechende Ausgestaltung des Verfahrens nach Anspruch 1 aufgezeigt.

In den Ansprüchen 3 und 4 sind zwei weitere alternative Ausführungsformen der Erfindung erläutert.

In den Ansprüchen 5 bis 8 sind weitere zweckmäßige Ausgestaltungen der Verfahren nach den Ansprüchen 1, 3 und 4 aufgezeigt.

Dadurch, daß zwischen die senkrecht zu den Wellen geteilten Gehäusehälften eine Vorrichtungsplatte von bestimmter Dicke mit dem Flanschbild der Gehäusehälften angeordnet wird, je Welle das jeweilige Wälzlager aufgesetzt wird, sowie eine Ausgleichsscheibe mit einer aus Erfahrungswerten abgeleiteten Dicke aufgesetzt wird und eine Axialkraftmeßdose angeordnet wird, die beiden Gehäusehälften während des Laufes auf das vorgeschriebene Drehmoment miteinander verspannt werden, die auftretenden Axialkräfte an den Wellen gemessen werden, zu den vorgegebenen, erwünschten Axialkräften mittels eines Rechners in Bezug gesetzt und daraus die optimierte Dicke der Ausgleichsscheiben für die einzelnen Wellen berechnet werden, können die unmittelbar an jeder Welle auftretenden Axialkräfte im montierten Zustand der Wellenlagerung festgestellt werden und die an den Wellen und in den Gehäusebohrungen auftretenden Toleranzsummierungen, sowie das Setzverhalten der Wälzlager beim Feststellen der erforderlichen Anstellung der Wälzlager berücksichtigt und auf eine bestimmte Temperatur bezogen werden.

Darüber hinaus können durch Eingeben der Vermessungsdaten der Außendurchmesser der Wälzlager und der sie bei der endgültigen Montage aufnehmenden Gehäusebohrungen auch bereits die durch die Passung zu erwartende Höhenänderung durch Korrekturfaktoren bei der Berechnung der optimalen Dicke der Ausgleichsscheiben berücksichtigt werden.

Für die Anwendung des erfindungsgemäßen Verfahrens und der Vorrichtungen zum Feststellen der erforderlichen Anstellung der Wälzlager von Wellenlagerungen in Gehäusen im Bereich einer Großserien-Getriebe- oder Motorenmontage ist anstelle der Axialkraftmeßdosen je Welle die Anwendung von Axialwegmeßdosen angebracht, die mit den vorgegebenen, erwünschten Axialkräften beaufschlagt werden, wobei der gemessene Axialweg in Verbindung mit den Vermessungsdaten der Durchmesser der Wälzlager und der Gehäusebohrungen sowie der Montagetemperatur wieder zur Berechnung von optimiert dicken Ausgleichsscheiben führt.

Um das erfindungsgemäße Verfahren und die Vorrichtungen in der Großserien-Getriebe- oder Motorenmontage einfach handhaben zu können, werden die für die einzelnen Wellen bestimmten Axialkraft- oder Axialweg-Meßdosen an der Vorrichtungsplatte derart zusammengefaßt, daß beim Aufsetzen der Vorrichtungsplatte auch bereits die Meßdosen in ihren entsprechenden Positionen zur Aufnahme der mit den Wälzlager versehenen Wellenenden liegen.

Die Erfindung wird anhand eines in der beiliegenden Zeichnung gezeigten Ausführungsbeispieles näher erläutert. Es zeigt:
- Fig. 1: Eine erste Ausführungsform der Vorrichtung mit Axialkraft-Meßdosen, wie sie im Bereich Versuche und Messungen angewendet werden kann;
- Fig. 2: eine weitere Ausführungsform einer Vorrichtung mit Axialweg-Meßdosen mit integrierten Axialkraft-Servos und
- Fig. 3: eine weitere Ausführungsform einer Vorrichtung mit Axialkraft-Federblöcken und sowohl Axialkraft-Meßdosen und Axialweg-Meßfühlern, wie sie in der Großserienmontage zur Anwendung kommt.

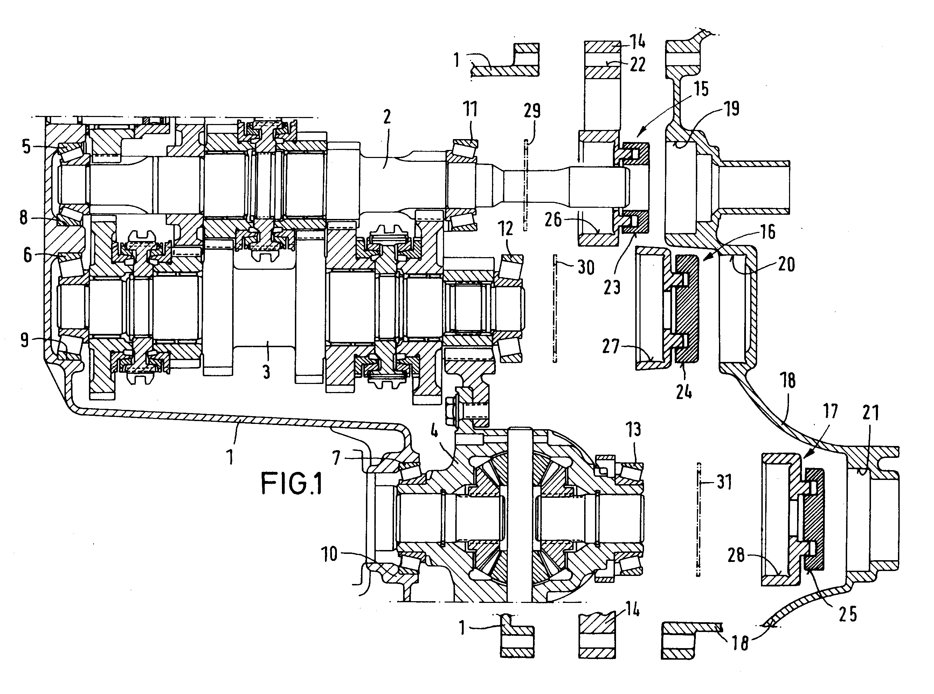

In der Figur 1 sind die drei Hauptgruppen der Vorrichtung achsparallel, jedoch im Abstand zueinander angeordnet, damit die Funktionsweise der erfindungsgemäßen Vorrichtung besser ersichtlich wird.

In der in Fig. 1 gezeigten linken Hauptgruppe, der Gehäusehälfte 1 eines Vorderachs-Wechsel-Differential-Getriebes, sind im wesentlichen drei Getriebewellen, eine Antriebswelle 2, eine Abtriebswelle 3 und eine Differentialwelle 4 angeordnet. An den linken Enden der Getriebewellen 2, 3 und 4 sind Kegelrollenlager 5, 6 und 7 angeordnet, die in entsprechenden Gehäusebohrungen 8, 9 und 10 der Gehäusehälfte 1 aufgenommen sind.

An den rechten Enden der Getriebewellen 2, 3 und 4 sind entsprechende Kegelrollenlager 11, 12 und 13 auf die Getriebewellen 2, 3 und 4 aufgesetzt.

In der in Fig. 1 gezeigten mittleren Hauptgruppe ist die eigentliche, im wesentlichen aus einer Vorrichtungsplatte 14 von bestimmter Dicke mit dem Flanschbild der Gehäusehälfte 1 sowie einer Meßdose 15 für die Antriebswelle 2, einer Meßdose 16 für die Abtriebswelle 3 und einer Meßdose 17 für die Differentialwelle 4 bestehende erfindungsgemäße Vorrichtung ersichtlich.

In der in Fig. 1 gezeigten rechten Hauptgruppe ist die zweite Gehäusehälfte 18 des Getriebegehäuses gezeigt, die im vorliegenden Fall zusammen mit einem Kupplungsgehäuse aus einem Teil besteht. In der Gehäusehälfte 18 sind Gehäusebohrungen 19, 20 und 21 zur Aufnahme der Wälzlager 11, 12 und 13 des Getriebes vorgesehen.

Die Vorrichtungsplatte 14 mit dem Flanschbild der Gehäusehälften 1 und 18 weist Durchgangsbohrungen 22 auf, mittels der sie über entsprechende Schraubenbolzen (nicht gezeigt), zwischen den beiden Gehäusehälften 1 und 18 liegend, verspannt werden kann.

Die Meßdosen 15, 16 und 17 weisen jeweils einen Außendurchmesser 23, 24 und 25 auf, mit denen sie in den entsprechenden Gehäusebohrungen 19, 20 und 21 der zweiten Gehäusehälfte 18 lose, d.h. ohne Radialpressung aufgenommen werden.

Die Meßdosen 15, 16 und 17 weisen jeweils Innendurchmesser 26, 27 und 28 auf, in denen die Wälzlager 11, 12 und 13 lose, d.h. ohne radiale Pressung aufgenommen werden können.

In Fig. 1 sind vor den Wälzlagern 11, 12 und 13 Ausgleichsscheiben 29, 30 und 31 etwas im Abstand liegend in Strich-Punkt-Linien angedeutet, deren Dicke nach Erfahrungswerten vorab festgelegt wird und die in die Innendurchmesser 26, 27 und 28 der Meßdosen 15, 16 und 17 eingelegt werden, bevor die erfindungsgemäße Vorrichtung mit den Gehäusehälften 1 und 18 verspannt wird.

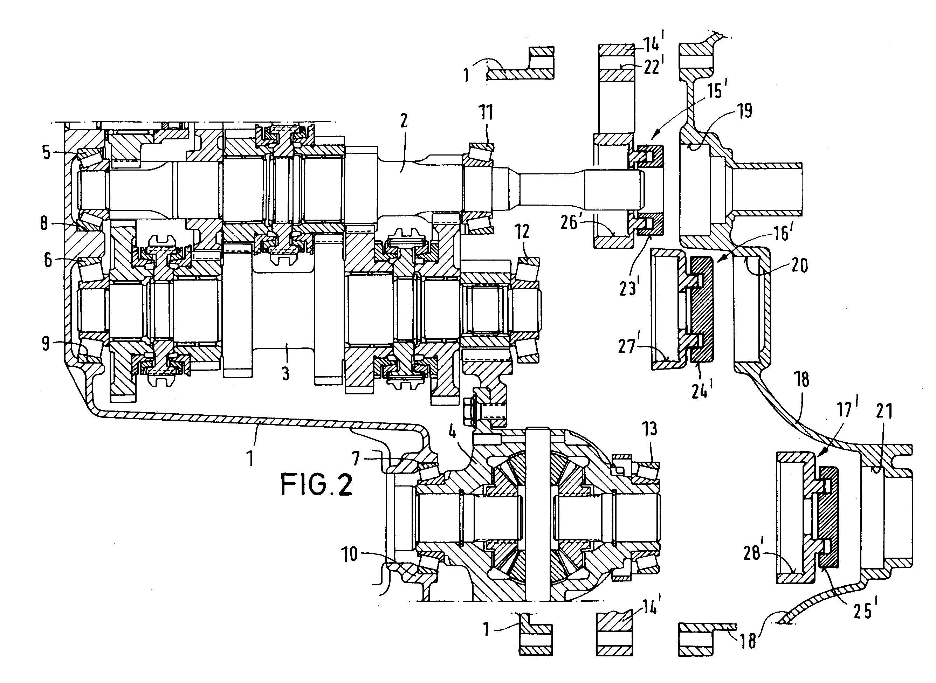

In Fig. 2 sind gleiche Teile mit den gleichen Bezugszeichen und nur etwas abweichende Teile mit den gleichen Bezugszeichen mit einem Strich-Index versehen gekennzeichnet.

Im Falle der Ausbildung der Meßdosen als Axialkraftmeßdosen 15′, 16′ und 17′ kann die entsprechende Dicke der anzuordnenden Ausgleichsscheiben auch bereits bei der Auslegung der Länge des abgesetzten Innendurchmessers berücksichtigt werden.

Bei der Ausführung der Meßdosen als Axialwegmeßdosen 15′, 16′ und 17′ erübrigt sich die Anordnung von entsprechenden Ausgleichsscheiben, da nach dem Aufbringen der vorgegebenen erwünschten Axialkraft an den einzelnen Getriebewellen die Meßdosen den Wegausgleich vornehmen und danach das Messen erfolgen kann.

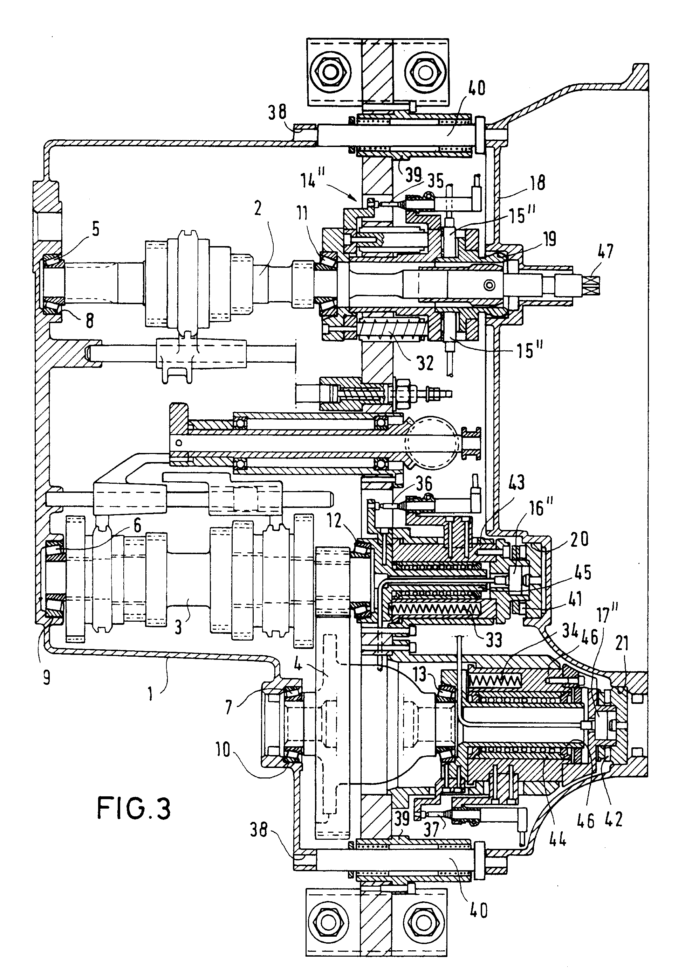

Bei der in Fig. 3 gezeigten Ausführung der Vorrichtung in Verbindung mit Axialwegmessung ist es zweckmäßig, eine Axialkraft etwa der gewünschten Größe durch Axialkraft-Federblöcke 32, 33 und 34 aufzubringen, denen Axialkraftmeßdosen 15˝, 16˝ und 17˝ nachgeschaltet und denen Axialwegmeßfühler 35, 36 und 37 parallelgeschaltet sind.

Bei der in Fig. 3 gezeigten, für den Einsatz in der Großserien-Montage bestimmten Vorrichtung müssen noch weitere Vorkehrungen getroffen werden, um Verspannungen bei der automatisierten Handhabung zu vermeiden.

Daher werden die Gehäusehälften 1 und 18 an ihren Befestigungsbohrungen 38 im Flanschbild über in einer Hülse 39 an der Vorrichtungsplatte 14˝ axial bewegliche Bolzen 40 mit einer der Gesamtdicke der Vorrichtung entsprechenden Länge abgestützt.

Ebenso werden die Axialkraftmeßdosen 15˝, 16˝ und 17˝ über eine Winkelweichungen ausgleichende Gelenkanordnung 41-42 in der zweiten Gehäusehälfte 18 abgestützt.

Auch die Axialkraft-Federblöcke 32, 33 und 34 sind in der Vorrichtungsplatte 14˝ über eine axiale Ausgleichsbewegungen zulassende Hülsen 43, 44 -Bolzen 45,46 -Anordnung aufgenommen.

Im nachfolgenden wird nun die generelle Handhabung des erfindungsgegemäßen Verfahrens und der Vorrichtung erläutert.

Die Gehäusehälfte 1 wird in einen Arbeitsblock (nicht gezeigt) eingelegt und darin die Getriebewellen 2, 3 und 4 mit allen erforderlichen Einzelheiten montiert. Nun wird die Vorrichtungsplatte 14 aufgelegt, deren korrekte Lage durch Zentrierstifte sichergestellt wird. Darauffolgend werden die Meßdosen 15, 16 und 17 mit den darin angeordneten Ausgleichsscheiben 29, 30 und 31 auf die Wälzlager 11, 12 und 13 der Getriebewellen 2, 3 und 4 aufgesetzt. Es muß dafür gesorgt werden, daß die entsprechenden Leitungen der Meßdosenanschlüsse nach außerhalb des Getriebes geleitet und mit dem Rechner verbunden werden, was durch eine zweckmäßige Verlegung der Leitungen an und in der Vorrichtungsplatte erfolgen kann.

Nach dem Einlegen eines Ganges wird die Antriebswelle 2 des Getriebes mit einer Rotationsvorrichtung 47 verbunden, die einen Getriebelauf von etwa 200 U/min. bewirkt, während dessen die Verbindungsbolzen zwischen den beiden Gehäusehälften 1 und 18 auf das vorschriftsmäßige Anzugsdrehmoment angezogen werden.

Sobald dieses vorgeschriebene Anzugsdrehmoment erreicht ist, wird nach einer bestimmten Zeit des Getriebelaufes, in der zu erwarten ist, daß die Getriebekomponenten sich "gesetzt" haben, der erste Meßvorgang eingeleitet, aufgrund dessen der Rechner dann die optimale Dicke der Ausgleichsscheiben für jede der Getriebewellen 2, 3 und 4 berechnet und ausgibt.

Zur Berücksichtigung üblicher Korrekturfaktoren, wie der Höhenänderung der Wälzlager durch die Einbau-Preßpassung, wie der gegenseitigen Beeinflussung der Lagerstellen durch die Federkennlinien der Gehäusehälften, oder der Umgebungstemperatur können entsprechende weitere Daten in den Rechner eingegeben werden, die dieser bei der Berechnung der optimalen Dicke der Ausgleichsscheiben entsprechend heranzieht.

Die Ausbildung der Meßdosen als Axialkraftmeßdosen bietet den Vorteil, daß unabhängig von der Getriebegehäusesteifigkeit reproduzierbare, genaue Feststellungen der Axialkraft möglich sind. Dabei können sich durch Verspannungen ergebende gegenseitige Beeinflussungen der Lagerstellen unmittelbar erfaßt und berücksichtigt werden. Das Setzverhalten der Wälzlager während des Getriebelaufes kann hierbei beobachtet werden. Rückmessungen nach dem Einlaufen oder nach einem Test geben Aufschluß über das Verschleiß- oder Setzverhalten der Lagerstellen.

Durch die Auslegung der Meßdosen als Axialwegmeßdosen kann bei der Großserien-Getriebe- oder Motorenmontage die zeitaufwendige Anordnung der nach Erfahrungswerten vorab bestimmten Ausgleichsscheiben vermieden werden, da die Axialwegmeßdosen den entsprechenden Wegausgleich bewirken. Durch eine entsprechende Vorgabe der Vorspannkraft bzw. der Axialkraft an den verschiedenen Getriebewellen kann auch hier unter Berücksichtigung weiterer Korrekturfaktoren, wie der Höhenänderung der Wälzlager durch die Einbaupressung und durch die Umgebungstemperatur im Montageraum sowie andere Korrekturfaktoren eine optimale Dicke der eingebauten Ausgleichsscheiben berechnet werden.

Noch günstiger kann die Vorrichtung in Verbindung mit der Axialwegmessung dadurch gestaltet werden, daß an Stelle von hydraulisch beaufschlagbaren und ansteuerbaren Axialwegmeßdosen, die sehr aufwendig sind, eine vorbestimmte Axialkraft auf die Wellenlagerung durch relativ einfache mechanische Axialkraft-Federblöcke aufgebracht wird, denen einfachere Axialkraftmeßdosen nachgeschaltet und denen Axialwegmeßfühler parallelgeschaltet werden.

Für den Einsatz in der Großserien-Getriebe- oder Motorenmontage ist es zweckmäßig, die Vorrichtungsplatte mit den einzelnen Meßdosen oder den Meßdosen, Federblöcken und Meßfühlern zu einer Vorrichtung zu verbinden, so daß ein Aufsetzen der Vorrichtungsplatte und der Meßdosen in einem Arbeitsvorgang durch einen Handhabungsautomaten erfolgen kann. Ebenso kann das Aufsetzen der zweiten Gehäusehälfte durch einen Handhabungsautomaten erfolgen und die Verspannung der beiden Gehäusehälften kann nach Art einer Presse durch an den Stellen der Bolzen angreifende Druckstössel erfolgen, die ein einfacheres Öffnen nach dem Meßvorgang zum Einlegen der endgültigen Ausgleichsscheiben ermöglichen.

Das Verbinden der Antriebswelle mit einer Rotationsvorrichtung sowie das Einlegen eines Ganges nach erfolgter Montage der Vorrichtungsplatte kann gleichfalls mittels an der Vorrichtungsplatte angeordneter Einrichtungen automatisch erfolgen.

## Patentansprüche

1. Verfahren zum Feststellen der erforderlichen Anstellung der Wälzlager (11, 12, 13) von Wellenlagerungen in Gehäusen, die senkrecht zu den Wellen (2, 3, 4) in zwei Gehäusehälften (1, 18) mit korrespondierenden Flanschbildern geteilt sind, wobei je Welle (2, 3, 4) jeder Gehäusehälfte (1, 18) ein Wälzlager (11, 12, 13) zugeordnet ist;
- bei dem die Wellen (2, 3, 4) mit den Wälzlagern (11, 12, 13) im Gehäuse montiert und mit auf die gemessenen Toleranzen der montierten Teile abgestimmten Ausgleichsscheiben (29, 30, 31) angestellt werden und
- während eines Laufes bei 100 bis 200 Umdrehungen pro Minute unter Vorspannkraft Parameter gemessen und zum Feststellen der Dicke der endgültigen Ausgleichscheiben (29, 30, 31) benutzt werden,
**dadurch gekennzeichnet,** daß
- die Wellen (2, 3, 4) in der ersten Gehäusehälfte (1) montiert werden, wobei auf jede Welle (2, 3, 4) das der zweiten Gehäusehälfte (18) zugeordnete Wälzlager (11, 12, 13) sowie eine Ausgleichscheibe (29, 30, 31) mit einer nach Erfahrungswerten festgelegten Dicke und eine Axialkraftmeßdose (15, 16, 17) aufgesetzt wird, die einen Innendurchmesser (26, 27, 28) zur losen Aufnahme des Wälzlagers (11, 12, 13) und der Ausgleichscheibe (29, 30, 31) und einen Außendurchmesser (23, 24, 25) zur losen Aufnahme der Meßdose in der entsprechenden Gehäusebohrung (19, 20, 21) in der zweiten Gehäusehälfte (18) aufweist,
- zwischen die Gehäusehälften (1, 18) eine Vorrichtungsplatte (14) mit dem Flanschbild der Gehäusehälften (1, 18) angeordnet wird, deren Dicke der Länge der Axialkraftmeßdosen (15, 16, 17) zwischen den der zweiten Gehäusehälfte (18) zugeordneten Wälzlagern (11, 12, 13) und den entsprechenden Gehäusebohrungen (19, 20, 21) in der zweiten Gehäusehälfte (18) im montierten Zustand entspricht,
- die beiden Gehäusehälften (1, 18) und die Vorrichtungsplatte (14) miteinander verspannt werden,
- während des Laufes die auftretenden Axialkräfte an den äußeren Laufringen der der zweiten Gehäusehälfte (18) zugeordneten Wälzlager (11, 12, 13) gemessen und zu den vorgegebenen, erwünschten Axialkräften mittels eines Rechners in Bezug gesetzt
- und daraus die optimierte Dicke der Ausgleichscheiben (29, 30, 31) für die einzelnen Wellen (2, 3, 4) berechnet werden.

2. Verfahren nach Anspruch 1,
**dadurch gekennzeichnet,** daß
- anstelle einzelner Ausgleichscheiben (29, 30, 31) um die entsprechenden Erfahrungswerte an den Anlageschultern der Innendurchmesser (26, 27, 28) verlängerte Axialkraftmeßdosen (15, 16, 17) verwendet werden.

3. Verfahren zum Feststellen der erforderlichen Anstellung der Wälzlager (11, 12, 13) von Wellenlagerungen in Gehäusen, die senkrecht zu den Wellen (2, 3, 4) in zwei Gehäusehälften (1, 18) mit korrespondierenden Flanschbildern geteilt sind, wobei je Welle (2, 3, 4) jeder Gehäusehälfte (1, 18) ein Wälzlager (11, 12, 13) zugeordnet ist;
- bei dem die Wellen (2, 3, 4) mit den Wälzlagern (11, 12, 13) im Gehäuse montiert und mit auf die gemessenen Toleranzen der montierten Teile abgestimmten Ausgleichscheiben (29, 30, 31) angestellt werden und
- während eines Laufes bei 100 bis 200 U/min. unter Vorspannkraft Parameter gemessen und zum Feststellen der Dicke der endgültigen Ausgleichscheiben (29, 30, 31) benutzt werden,
**dadurch gekennzeichnet,** daß
- die Wellen (2, 3, 4) in der ersten Gehäusehälfte (1) montiert werden, wobei auf jede Welle (2, 3, 4) das der zweiten Gehäusehälfte (18) zugeordnete Wälzlager (11, 12, 13) und auf diesem je eine Axialwegmeßdose (15', 16', 17') mit einem, aus einer Zylinder/Kolben-Einheit gebildeten Axialkraft-Servo lose aufgesetzt wird, wobei die Axialwegmeßdosen (15', 16', 17') mit integriertem Axialkraft-Servo in den Gehäusebohrungen der zweiten Gehäusehälfte (18) lose aufgenommen werden,
- zwischen die Gehäusehälften (1, 18) eine Vorrichtungsplatte (14') mit dem Flanschbild der Gehäusehälften (1, 18) angeordnet wird, deren Dicke der Länge der Akialwegmeßdosen (15', 16', 17') mit integrierten Axialkraft-Servos entspricht,
- die beiden Gehäusehälften (1, 18) und die Vorrichtungsplatte (14') miteinander verspannt werden,
- über die Axialkraft-Servos die erwünschten Axialkräfte auf die jeweiligen Wälzlager (11, 12, 13) aufgebracht werden und
- während eines Laufes die auftretenden Axialwege an den Außenringen der Wälzlager gemessen und mittels eines Rechners in Bezug zu den erwünschten Axialkräften gesetzt werden,
- um daraus die optimierte Dicke der endgültigen Ausgleichscheiben (29, 30, 31) zu berechnen.

4. Verfahren zum Feststellen der erforderlichen Anstellung der Wälzlager (11, 12, 13) von Wellenlagerungen in Gehäusen, die senkrecht zu den Wellen (2, 3, 4) in zwei Gehäusehälften (1, 18) mit korrespondierenden Flanschbildern geteilt sind, wobei je Welle (2, 3, 4) jeder Gehäusehälfte (1, 18) ein Wälzlager (11, 12, 13) zugeordnet ist,
- bei dem die Wellen (2, 3, 4) mit den Wälzlagern (11, 12, 13) im Gehäuse montiert und mit auf die gemessenen Toleranzen der montierten Teile abgestimmten Ausgleichscheiben (29, 30, 31) angestellt werden und
- während eines Laufes bei 100 bis 200 U/min. unter Vorspannkraft Parameter gemessen und zum Feststellen der Dicke der endgültigen Ausgleichscheiben (29, 30, 31) benutzt werden,
**dadurch gekennzeichnet,** daß
- die Wellen (2, 3, 4) in der ersten Gehäusehälfte (1) montiert werden, wobei auf jede Welle (2, 3, 4) das der zweiten Gehäusehälfte (18) zugeordnete Wälzlager (11, 12, 13) und auf diese je eine Axialkraftmeßdose (15'', 16'', 17'') mit einem nachgeschalteten Axialkraft-Federblock (32, 33, 34) und einem parallel geschalteten Axialweg-Meßfühler (35, 36, 37) lose aufgesetzt werden,
- zwischen die Gehäusehälften (1, 18) eine Vorrichtungsplatte (14'') mit dem Flanschbild der Gehäusehälften (1, 18) angeordnet wird, deren Dicke der Länge der Axialkraftmeßdosen (15'', 16'', 17'') mit den nachgeschalteten Axial- kraft-Federblöcken (32, 33, 34) entspricht, und wobei die Axialkraftmeßdosen (15'', 16'', 17'') in den Gehäusebohrungen der zweiten Gehäusehälfte (18) lose aufgenommen werden,
- die beiden Gehäusehälften (1, 18) und die Vorrichtungsplatte (14'') miteinander verspannt werden, wodurch die Axialkraft-Federblöcke (32, 33, 34) eine vorbestimmte Axialkraft aufbringen,
- während eines Laufes sowohl die auftretenden Axialwege an den Außenringen der Wälzlager (11, 12, 13) als auch die tatsächlichen Axialkräfte gemessen und mittels eines Rechners in Bezug zu den erwünschten Axialkräften gesetzt werden,
- um daraus die optimierte Dicke der Ausgleichscheiben (29, 30, 31) zu berechnen.

5. Verfahren nach den Ansprüchen 1 bis 4,
**dadurch gekennzeichnet,** daß
- bei der Berechnung der Dicke der Ausgleichscheiben (29, 30, 31) zusätzlich zu den gemessenen Axialkräften bzw. Axialwegen weitere Parameter, wie
- Raumtemperatur;
- Beeinflussung der Lager untereinander;
- Federkennlinie der Gehäusehälften (als Selbstlernprogramm) und
- Federkennlinie der Axialkraftmeßdose;
- Vermessungsdaten der Durchmesser der Wälzlager und der Gehäusebohrungen (Passungen)
als Korrekturfaktoren berücksichtigt werden.

6. Verfahren nach Anspruch 4,
**dadurch gekennzeichnet,** daß
- die Gehäusehälften (1, 18) an ihren Befestigungsbohrungen (38) im Flanschbild über in einer Hülse (39) an der Vorrichtungsplatte (14'') axial bewegliche Bolzen (40) mit einer Länge entsprechend der Gesamtdicke der Vorrichtung aneinander abgestützt sind.

7. Verfahren nach Anspruch 4,
**dadurch gekennzeichnet,** daß
- die Axialkraftmeßdosen (15'', 16'', 17'') über eine Winkelabweichungen ausgleichende Gelenkanordnung (41, 42) in den Gehäusebohrungen (19, 20, 21) in der zweiten Gehäusehälfte (18) abgestützt sind.

8. Verfahren nach Anspruch 4,
**dadurch gekennzeichnet,** daß
- die Axialkraft-Federblöcke (32, 33, 34) in der Vorrichtungsplatte (14'') über eine axiale Ausgleichsbewegungen zulassende Hülse- (43, 44), -Bolzen- (45, 46) -Anordnung aufgenommen sind.

## Claims

1. Process for determining the necessary position of the rolling bearings (11, 12, 13) of shaft bearings in casings which are divided perpendicularly to the shafts (2, 3, 4) into two casing halves (1, 18) having corresponding flange images, wherein each shaft (2, 3, 4) of each casing half (1, 18) is allocated a rolling bearing (11, 12, 13); in which the shafts (2, 3, 4) are installed in the casing with the rolling bearings (11, 12, 13) and are positioned with compensating discs (29, 30, 31) adapted to the measured tolerances of the installed parts and, during a run at 100 to 200 revolutions per minute, parameters are measured under initial tension and are used to determine the thickness of the final compensating discs (29, 30, 31), characterised in that the shafts (2, 3, 4) are installed in the first casing half (1), wherein the rolling bearing (11, 12, 13) allocated to the second casing half (18) as well as a compensating disc (29, 30, 31) with a thickness determined by experimental values and an axial load measuring cell (15, 16, 17) are placed on each shaft (2, 3, 4), the axial load measuring cell (15, 16, 17) having an internal diameter (26, 27, 28) for loosely holding the rolling bearing (11, 12, 13) and the compensating disc (29, 30, 31) and an external diameter (23, 24, 25) for loosely holding the load measuring cell in the corresponding casing bore (19, 20, 21) in the second casing half (18), an apparatus plate (14) with the flange image of the casing halves (1, 18) is arranged between the casing halves (1, 18), its thickness corresponding to the length of the axial load measuring cells (15, 16, 17) between the rolling bearings (11, 12, 13) allocated to the second casing half (18) and the corresponding casing bores (19, 20, 21) in the second casing half (18) in the installed state, the two casing halves (1, 18) and the apparatus plate (14) are fastened to one another, the axial loads occurring at the outer bearing races of the rolling bearings (11, 12, 13) allocated to the second casing half (18) are measured during the run and correlated to the predetermined desired axial loads by means of a computer and the optimised thickness of the compensating discs (29, 30, 31) for the individual shafts (2, 3, 4) are calculated from them.

2. Process according to claim 1, characterised in that instead of individual compensating discs (29, 30, 31) there are used axial load measuring cells (15, 16, 17) which are lengthened by the corresponding experimental values at the contact shoulders of the internal diameters (26, 27, 28).

3. Process for determining the necessary position of the rolling bearings (11, 12, 13) of shaft bearings in casings which are divided perpendicularly to the shafts (2, 3, 4) into two casing halves (1, 18) having corresponding flange images, wherein each shaft (2, 3, 4) of each casing half (1, 18) is allocated a rolling bearing (11, 12, 13); in which the shafts (2, 3, 4) are installed in the casing with the rolling bearings (11, 12, 13) and are positioned with compensating discs (29, 30, 31) adapted to the measured tolerances of the installed parts and, during a run at 100 to 200 revolutions per minute, parameters are measured under initial tension and are used to determine the thickness of the final compensating discs (29, 30, 31), characterised in that the shafts (2, 3, 4) are installed in the first casing half (1), wherein the rolling bearing (11, 12, 13) allocated to the second casing half (18) and, on it, a respective axial displacement measuring cell (15', 16', 17') with an axial load servo formed from a cylinder/piston unit are loosely placed on each shaft (2, 3, 4), the axial displacement measuring cells (15', 16', 17') with integrated axial load servo being held loosely in the casing bores in the second casing half (18), an apparatus plate (14') with the flange image of the casing halves (1, 18) is arranged between the casing halves (1, 18), its thickness corresponding to the length of the axial displacement measuring cells (15', 16', 17') with integrated axial load servos, the two casing halves (1, 18) and the apparatus plate (14') are fastened to one another, the desired axial loads are applied to the respective rolling bearings (11, 12, 13) via the axial load servos and, during a run, the axial displacements occurring at the outer races of the rolling bearings are measured and correlated to the desired axial loads by means of a computer so that the optimised thickness of the final compensating discs (29, 30, 31) may be calculated from them.

4. Process for determining the necessary position of the rolling bearings (11, 12, 13) of shaft bearings in casings which are divided perpendicularly to the shafts (2, 3, 4) into two casing halves (1, 18) having corresponding flange images, wherein each shaft (2, 3, 4) of each casing half (1, 18) is allocated a rolling bearing (11, 12, 13); in which the shafts (2, 3, 4) are installed in the casing with the rolling bearings (11, 12, 13) and are positioned with compensating discs (29, 30, 31) adapted to the measured tolerances of the installed parts and, during a run at 100 to 200 revolutions per minute, parameters are measured under initial tension and are used to determine the thickness of the final compensating discs (29, 30, 31), characterised in that the shafts (2, 3, 4) are installed in the first casing half (1) , wherein the rolling bearing (11, 12, 13) allocated to the second casing half (18) and, on it, a respective axial load measuring cell (15'', 16'', 17'') with a subsequent axial load spring block (32, 33, 34) and an axial displacement pick-up (35, 36, 37) connected in parallel are loosely placed on each shaft (2, 3, 4), an apparatus plate (14'') with the flange image of the casing halves (1, 18) is arranged between the casing halves (1, 18), its thickness corresponding to the length of the axial load measuring cells (15'', 16'', 17'') with the subsequent axial load spring blocks (32, 33, 34) and wherein the axial load measuring cells (15'', 16'', 17'') are loosely held in the casing bores of the second casing half (18), the two casing halves (1, 18) and the apparatus plate (14'') are fastened to one another so that the axial load spring blocks (32, 33, 34) apply a predetermined axial load, the axial displacements occurring at the outer rings of the rolling bearings (11, 12, 13) as well as the actual axial loads are measured during a run and are correlated to the desired axial loads by means of a computer, in order to calculate the optimised thickness of the compensating discs (29, 30, 31) from them.

5. Process according to claims 1 to 4, characterised in that, when calculating the thickness of the compensating discs (29, 30, 31), further parameters are considered as correction factors in addition to the measured axial loads and axial displacements such as room temperature, influence of the bearings on one another, spring characteristic of the casing halves (as a self-learning program) and spring characteristic of the axial load measuring cell, measurement data on the diameter of the rolling bearings and the casing bores (fits).

6. Process according to claim 4, characterised in that the casing halves (1, 18) are supported on one another at their fastening bores (38) in the flange image by bolts (40) which are axially movable in a tube (39) on the apparatus plate (14'') and have a length corresponding to the overall thickness of the apparatus.

7. Process according to claim 4, characterised in that the axial load measuring cells (15'', 16'', 17'') are supported in the casing bores (19, 20, 21) in the second casing half (18) by a joint arrangement (41, 42) compensating angular displacements.

8. Process according to claim 4, characterised in that the axial load spring blocks (32, 33, 34) are held in the apparatus plate (14'') by a tube (43, 44) and bolt (45, 46) arrangement permitting axial compensating movements.

## Revendications

1. Procédé pour déterminer le serrage nécessaire des roulements (11, 12, 13) de paliers d'arbres dans des carters qui sont divisés perpendiculairement aux arbres (2, 3, 4) en deux demi-carters (1, 18) ayant des configurations de bridage correspondantes, un roulement (11, 12, 13) étant coordonné dans chaque demi-carter (1, 18) à chaque arbre (2, 3, 4);
- selon lequel on monte les arbres (2, 3, 4) ensemble avec les roulements (11, 12, 13) dans le carter et on les serre à l'aide de rondelles de compensation (29, 30, 31) accordées aux tolérances mesurées des pièces montées et
- selon lequel, au cours d'un fonctionnement à 100 à 200 tours/minute sous une force de précontrainte, on mesure des paramètres et on les utilise pour déterminer l'épaisseur des rondelles de compensation (29, 30, 31) définitives,
caractérisé en ce que
- on monte les arbres (2, 3, 4) dans le premier demicarter (1) et on dispose sur chaque arbre (2, 3, 4) le roulement (11, 12, 13) coordonne au deuxième demi-carter (18) ainsi qu'une rondelle de compensation (29, 30, 31) d'une épaisseur fixée d'après des valeurs empiriques et une boîte de mesure de force axiale (15, 16, 17) qui présente un diamètre intérieur (26, 27, 28) pour la libre réception du roulement (11, 12, 13) et de la rondelle de compensation (29, 30, 31) et un diamètre extérieur (23, 24, 25) pour la libre réception de la boîte de mesure dans l'alésage correspondant (19, 20, 21) du deuxième demi-carter (18),
- on place entre les demi-carters (1, 18) une plaque de dispositif (14) ayant la configuration de bridage des demi-carters (1, 18) et dont l'épaisseur correspond à la longueur des boîtes de mesure de force axiale (15, 16, 17) entre les roulements (11, 12, 13) coordonnés au deuxième demi-carter (18) et les alésages correspondants (19, 20, 21) du second demi-carter (18) à l'état monté,
- on assemble les deux demi-carters (1, 18) et la plaque de dispositif (14) entre eux,
- on mesure, pendant le fonctionnement, les forces axiales exercées sur les bagues extérieures des roulements (11, 12, 13) coordonnés au second demicarter (18) et on les rapporte au moyen d'un calculateur aux forces axiales désirées, préfixées,
- et on calcule à partir du résultat de cette opération l'épaisseur optimisée des rondelles de compensation (29, 30, 31) pour les différents arbres (2, 3, 4).

2. Procédé selon la revendication 1, caractérisé en ce que
- à la place de rondelles de compensation individuelles (29, 30, 31), on utilise des boîtes de mesure de force axiale (15, 16, 17) allongées des valeurs empiriques correspondantes au droit des épaulements d'appui des cavités ayant lesdits diamètres intérieurs (26, 27, 28).

3. Procédé pour déterminer le serrage nécessaire des roulements (11, 12, 13) de paliers d'arbres dans des carters qui sont divisés perpendiculairement aux arbres (2, 3, 4) en deux demi-carters (1, 18) ayant des configurations de bridage correspondantes, un roulement (11, 12, 13) étant coordonné dans chaque demi-carter (1, 18) à chaque arbre (2, 3, 4);
- selon lequel on monte les arbres (2, 3, 4) ensemble avec les roulements (11, 12, 13) dans le carter et on les serre à l'aide de rondelles de compensation (29, 30, 31) accordées aux tolérances mesurées des pièces montées et
- selon lequel, au cours d'un fonctionnement à 100 à 200 tours/minute sous une force de précontrainte, on mesure des paramètres et on les utilise pour déterminer l'épaisseur des rondelles de compensation (29, 30, 31) définitives,
caractérisé en ce que
- on monte les arbres (2, 3, 4) dans le premier demicarter (1), on dispose sur chaque arbre (2, 3, 4) le roulement (11, 12, 13) coordonné au second demicarter (18) et on dispose librement sur chacun de ces roulements une boîte de mesure de déplacement axial (15', 16', 17') avec un servomécanisme fournisseur de force axiale forme par un ensemble cylindre/piston, les boîtes de mesure de déplacement axial (15', 16', 17') avec le servomécanisme fournisseur de force axiale intégré étant reçus librement dans les alésages du second demi-carter (18),
- on place entre les demi-carters (1, 18) une plaque de dispositif (14') ayant la configuration de bridage des demi-carters (1, 18) et dont l'épaisseur correspond à la longueur des boîtes de mesure de déplacement axial (15', 16', 17') avec les servomécanismes fournisseurs de force axiale intégrés,
- on assemble les deux demi-carters (1, 18) et la plaque de dispositif (14') entre eux,
- on applique aux roulements (11, 12, 13) concernés les forces axiales désirées au moyen des servomécanismes et
- on mesure pendant un fonctionnement les déplacements axiaux se produisant sur les bagues extérieures des roulements et on les rapporte au moyen d'un calculateur aux forces axiales désirées,
- afin de calculer, à partir du résultat de cette opération, l'épaisseur optimisée des rondelles de compensation (29, 30, 31) définitives.

4. Procédé pour déterminer le serrage nécessaire des roulements (11, 12, 13) de paliers d'arbres dans des carters qui sont divisés perpendiculairement aux arbres (2, 3, 4) en deux demi-carters (1, 18) ayant des configurations de bridage correspondantes, un roulement (11, 12, 13) étant coordonné dans chaque demi-carter (1, 18) à chaque arbre (2, 3, 4);
- selon lequel on monte les arbres (2, 3, 4) ensemble avec les roulements (11, 12, 13) dans le carter et on les serre à l'aide de rondelles de compensation (29, 30, 31) accordées aux tolérances mesurées des pièces montées et
- selon lequel, au cours d'un fonctionnement a 100 à 200 tours/minute sous une force de précontrainte, on mesure des paramètres et on les utilise pour déterminer l'épaisseur des rondelles de compensation (29, 30, 31) définitives,
caractérisé en ce que
- on monte les arbres (2, 3, 4) dans le premier demicarter (1), on dispose sur chaque arbre (2, 3, 4) le roulement (11, 12, 13) coordonné au second demicarter (18) et on dispose librement sur chacun de ces roulements une boîte de mesure de force axiale (15'', 16'', 17'') avec un bloc de ressorts fournisseur de force axiale (32, 33, 34) prévu à la suite de cette boîte de mesure et un capteur de mesure de déplacement axial (35, 36, 37) monté en parallèle avec cette boîte de mesure,
- on place entre les demi-carters (1, 18) une plaque de dispositif (14'') ayant la configuration de bridage des demi-carters (1, 18) et dont l'épaisseur correspond à la longueur des boîtes de mesure de force axiale (15'', 16'', 17'') avec les blocs de ressorts fournisseurs de force axiale (32, 33, 34) prévus à leur suite, les boîtes de mesure de force axiale (15'', 16'', 17'') étant reçues librement dans les alésages du second demi-carter (18),
- on assemble les deux demi-carters (1, 18) et la plaque de dispositif (14'') entre eux, de sorte que les blocs de ressorts (32, 33, 34) fournissent une force axiale préfixée,
- pendant un fonctionnement, on mesure à la fois les déplacements axiaux se produisant sur les bagues extérieures des roulements (11, 12, 13) et les forces axiales effectives et on les rapporte au moyen d'un calculateur aux forces axiales désirées,
- afin de calculer, à partir du résultat de cette opération, l'épaisseur optimisée des rondelles de compensation (29, 30, 31).

5. Procédé selon les revendications 1 à 4, caractérisé en ce que
- lors du calcul de l'épaisseur des rondelles de compensation (29, 30, 31), on tient compte, en plus des forces axiales et/ou des déplacements axiaux mesurés, d'autres paramètres, tels que
- la température ambiante;
- l'influence que les paliers exercent les uns sur les autres;
- la caractéristique élastique des demi-carters (en tant que programme d'auto-apprentissage) et
- la caractéristique élastique de la boîte de mesure de force axiale; ainsi que
- les données mesurées relatives aux diamètres des roulements et des alésages du carter (ajustages)
en tant que facteurs de correction.

6. Procédé selon la revendication 4, caractérisé en ce que
- les demi-carters (1, 18) sont mutuellement appuyés au droit de leurs perçages de fixation (38), correspondant à la configuration de bridage, au moyen de tiges (40) axialement mobiles dans une douille (39) prévue sur la plaque de dispositif (14''), les tiges ayant une longueur qui correspond à l'épaisseur totale du dispositif.

7. Procédé selon la revendication 4, caractérisé en ce que
- les boîtes de mesure de force axiale (15'', 16'', 17'') sont appuyées dans les alésages (19, 20, 21) du second demi-carter (18) avec interposition d'un système articulé (41, 42) compensant des écarts angulaires.

8. Procédé selon la revendication 4, caractérisé en ce que
- les blocs de ressorts fournisseurs de force axiale (32, 33, 34) sont reçus dans la plaque de dispositif (14'') avec interposition d'un système de manchons (43, 44) et de tiges (45, 46) autorisant des mouvements axiaux de compensation.
